# EUROPEAN PATENT SPECIFICATION

(11) **EP 0 694 225 B1**
(45) Date of publication and mention of the grant of the patent: **12.03.1997**
(21) Application number: 94912616.3
(22) Date of filing: 14.04.1994
(51) Int. Cl.: H02G 3/06, H02G 3/08, H01R 13/56

(54) **CABLE SEALING AND LOCKING DEVICE**
KABELDICHTUNG UND SICHERUNGSVORRICHTUNG
DISPOSITIF DE BLOCAGE ET D'ETANCHEITE DESTINE A DES CABLES

(30) Priority: 14.04.1993 GB 9307698; 13.01.1994 GB 9400697
(43) Date of publication of application: 31.01.1996
(73) Proprietor: BOWTHORPE PLC, Crawley, West Sussex RH10 2RZ (GB)
(72) Inventor: FOSS, Victoria, Ann, Peverell, PLymouth, Devon PL3 4NX (GB)
(74) Representative: Gibson, Stewart Harry
(86) International application number: GB9400789
(87) International publication number: WO9424747

(56) References cited:
- DE-B- 1 290 214
- FR-A- 1 450 565

## Description

This invention relates to a device for sealing and locking a cable entering or leaving a cable splice closure or the housing of electrical equipment. The device is suitable for a wide range of different types of cable, including copper conductor, coaxial and optical fibre cables.

Various types of sealing and locking devices are known, for use on power or telecommunications cables to seal against the ingress of moisture and foreign matter into a splice closure or equipment housing which the cable enters, and also to resist the cable being pulled out. In some types, the cable sealing and locking device comprises a number of components, each component fulfilling a separate function: for example the device may comprise a sealing member, a cable retaining or locking member, and an actuating member which is movable to actuate the sealing and/or locking members. Typically the sealing member comprises a compressible, flexible rubber material or a self-amalgamating tape or a mastic, which is compressed between the cable and the entry port of the splice enclosure or equipment housing, or between the body of the sealing and locking device and the cable or the entry port, or both. The compressible, flexible rubber seal is typically in the shape of an annular ring or cylindrical sleeve, which may be split so that it can be wrapped around the cable, and which distorts when compressed, to make contact with the adjacent mating surfaces. In some known devices, a separate component is screwed into the cable entry port to both compress the sealing member around the cable with sufficient pressure to prevent the cable being pulled out subsequently. These multiple-component cable sealing and locking devices are of complicated construction and expensive to manufacture, time consuming to install and require a special installation tool.

It is also known to recover a heat-shrinkable sleeve, internally coated with a hot melt adhesive, partly onto the cable and partly onto a tubular entry port which projects from the splice closure or equipment housing. The recovered sleeve both seals the entry port and also locks the cable against being pulled out. However, this technique requires the entry port to be of a material which is resistant to high temperatures and exhibits a relatively high peel strength between the hot melt adhesive of the heat-shrinkable sleeve and entry port. Also, in order to install the heat-shrinkable sleeve, it is necessary to heat it to a temperature of 90 to 135°C, which poses a safety risk in some circumstances (e.g. when underground in confined spaces, or in aerial applications where mobility is restricted and climatic conditions are adverse).

DE-A-1290214 discloses a cable sealing and locking device which comprises an outer ring component and an inner sleeve component. Firstly, the ring component is pushed into an opening in a panel so that its flange abuts the panel around the opening. The cable is passed through the sleeve component, then the sleeve component and cable are pushed through the centre of the ring component: both components are of elastomeric material and interengage by means of an internal peripheral rib on the ring component engaging an external groove of the sleeve component.

FR-A-1450565 discloses a cable sealing and locking device which comprises a sleeve of rigid plastics material for receiving a cable. The sleeve has a tapered exterior surface and an external peripheral groove, so that when it is passed through an opening in a panel, the edge of the panel engages in the peripheral groove of the sleeve.

In accordance with this invention, there is provided a device for sealing and locking a cable within an entry port of a housing, said device comprising an elongate tubular body of elastomeric material for receiving said cable therethrough, the tubular body having a first end and an opposite, tail end and being formed with an annular external projection intermediate its two ends, characterised in that the wall of the tubular body is tapered in thickness, over a section of the body between said first end thereof and the external projection, arranged to enable the device to be pulled into said entry port from its said tail end so that said tapered section becomes located with said entry port and radially compressed between the cable and the entry port.

Preferably the elongate tubular body of the device is formed with a second annular, external projection, at or adjacent said first end of the tubular body. The two annular projections of the tubular body are arranged to abut opposite ends of the entry port, when the device is installed in the entry port, to prevent movement of the device in either axial direction.

Preferably the exterior of the elongate tubular body tapers from its one end and toward the opposite end, over said section thereof. Instead the interior of the tubular body may taper towards its said first end, over said section thereof.

Preferably the interior of the tubular body is formed with a series of annular grooves, at least over said section thereof.

Preferably the exterior of the tubular body is formed with a series of annular grooves, at least between the first external annular projection and its opposite, tail end.

The tubular body of the device may comprise an outer sleeve of relatively incompressible elastomeric material, and an inner sleeve of relatively soft and compressible elastomeric material. The inner sleeve preferably extends from a point at or adjacent said first end of the tubular body, to a point at or adjacent said first external annular projection of the tubular body. Preferably the wall thickness of the inner sleeve tapers in the direction away from said first end of the tubular body.

Where the tubular body comprises inner and outer sleeves as described above, preferably the outer sleeve is formed with an internal annular projection at or adjacent said first end of the tubular body. Preferably the internal and external annular projections, at this end of the body, lie generally on a cone directed axially outwardly of this end of the body: thus, if after installation a force is applied to the cable tending to pull it out of the cable entry port, the cable pulls on the internal annular projection to deflect the internal and external annular projections onto a shallower cone and the internal annular projection grips the cable more firmly. Preferably the inner surface of the end of the inner sleeve substantially corresponds in diameter to the inner periphery of the internal annular projection of the outer sleeve.

Preferably said first external annular projection of the tubular body has a shoulder facing said first end of the tubular body, and a gradually tapering opposite face. The latter tapering face facilitates pulling of the device into position within the cable entry port of the cable splice enclosure or equipment housing.

Preferably the material of the outer sleeve comprises an Ethylene propylene rubber (EPR). Preferably the material has a Shore hardness value of 50 to 90. Preferably the material has a good resistance to permanent set, resistance to tear, moisture penetration, high temperatures, ozone and chemical attack from a wide variety of solvents, lubricants, etc. used during cable manufacture, cleaning or installation.

Preferably the material of the inner sleeve comprises a liquid silicone. Preferably the material has a Shore hardness value of 15 to 60. Preferably the material has a good resistance to permanent set, moisture penetration and to solvents or chemicals used during cable manufacture, cleaning or installation.

The material of the cable sealing and locking device can be coloured according to the size or type of cable for which the device is intended.

The tubular body of the device may have a single through-passage. Alternatively, it may have two through-passages side-by-side, which may be separate from each other or may be joined via a narrow, longitudinal slit: the device is then suitable for use with so-called "siamese" cables which comprise a pair of cables joined side-by-side by a narrow, longitudinal web.

The tubular body of the device may be provided with a coating of lubricating and/or sealing substance over its internal surface.

Also in accordance with this invention, there is provided a method of installing a cable through a cable entry port of a cable splice enclosure or of a housing of electrical equipment, the method comprising passing the cable through the tubular body of a cable sealing and locking device, said tubular body being of elastomeric material, having a first end and an opposite, tail end and being formed with an annular external projection intermediate its said two ends, then pulling said tubular body together with said cable into the cable entry port, the method being characterised in that the wall of the tubular body tapers in thickness, over a section of the body between said first end thereof and the external projection, and the device is pulled into said entry port by means of its said opposite, tail end and so that the tapered section of the tubular body becomes located within said cable entry port and compressed between the cable entry port and the cable.

Generally the cable can only be released, once installed in the above manner, by cutting the sealing and locking device around its circumference, at the outer end of the cable entry port, then pulling the cable and remaining portion of the device from the inner end of the entry port.

It will be appreciated that the sealing and locking device of this invention is of relatively simple and inexpensive construction, and can be installed quickly and easily without the need of a heat source or any particularly high level of skill or training on the part of the installer. Also the device can accommodate a range of diameters of cables and entry ports.

Embodiments of this invention will now be described by way of examples only and with reference to the accompanying drawings, in which:
FIGURE 1 is a longitudinal section through a first embodiment of cable sealing and locking device in accordance with this invention;
FIGURE 2 is a longitudinal section through a second embodiment of cable sealing and locking device in accordance with the invention;
FIGURE 3 is a longitudinal section through a third embodiment of cable sealing and locking device in accordance with this invention;
FIGURE 4 is a longitudinal section through a fourth embodiment of cable sealing and locking device in accordance with this invention;
FIGURE 5 is a longitudinal section through the first embodiment of cable sealing and locking device fitted to a cable and at a first stage of introduction into a cable entry port;
FIGURE 6 is a similar section showing the device at a later stage in the process of installation into the cable entry port;
FIGURE 7 is a similar section showing the device when fully installed in the cable entry port;
FIGURE 8 is a longitudinal section through the device of Figure 1, shown being slid over an applicator tool and onto a cable;
FIGURE 9 is a longitudinal section through the device of Figure 1 when installed, the left-hand side showing the device in relaxed condition and the right-hand side showing the device when a tensile load is applied to the cable;
FIGURE 10 is a longitudinal section through the device of Figure 1 when installed, and showing the effect of bending the cable relative to the cable entry port;
FIGURE 11 is a longitudinal section through a further embodiment of cable sealing and locking device in accordance with this invention;
FIGURE 12 is a cross-section through a modified device in accordance with this invention; and
FIGURE 13 is a cross-section through another modified device in accordance with this invention.

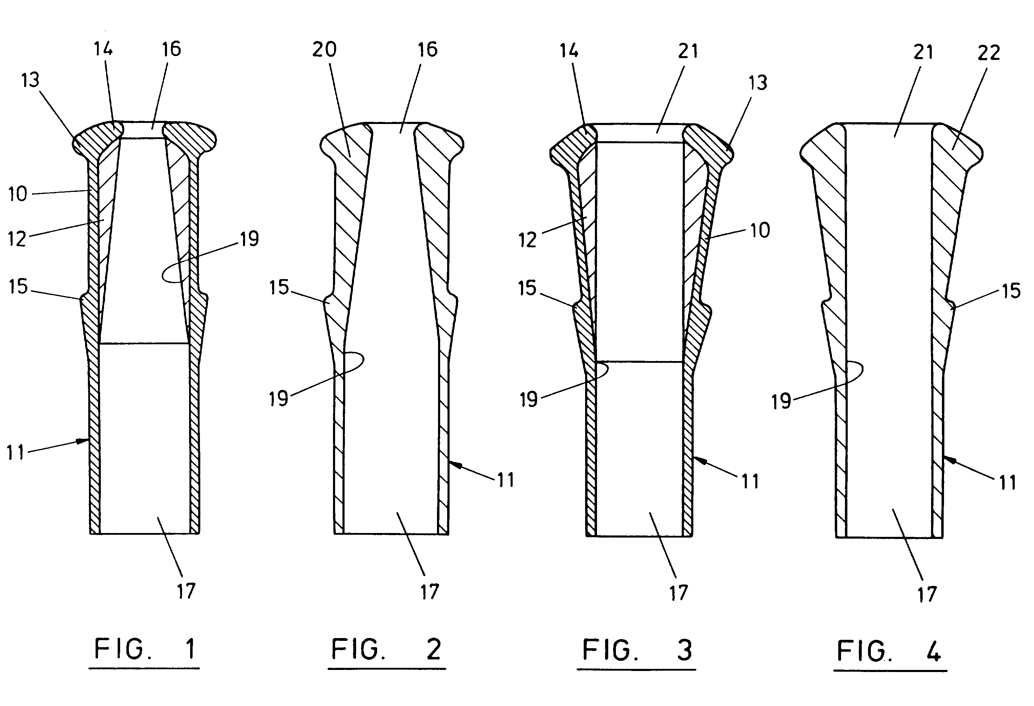

Referring to Figure 1 of the drawings, there is shown a cable sealing and locking device in the form of an elongate cylindrical body 11 which comprises an outer sleeve 10 and an inner sleeve 12 which extends for approximately one half of the length of the outer sleeve. The outer sleeve 10 is of generally uniform internal and external diameters, but has internal and external projections 14,13 at one end 16 and an external projection 15 at or adjacent its mid-length. The inner sleeve 12 tapers internally from its inner end 19, to merge with the inner periphery of the internal projection 14 at the end 16. The external projection 15 has an abrupt shoulder facing the external projection 13, whilst it tapers gradually in the opposite direction to merge with the outer surface of the outer sleeve 10.

Figure 2 shows a device which differs from the device of Figure 1, in that it is formed as one-piece 20 having a uniform external diameter, apart from the annular projections 14 and 15, and a uniform internal diameter from the end 17 to a point 19 at or adjacent its mid-length, and then tapering to the end 16.

Figure 3 shows a device corresponding to the device of Figure 1, and comprising outer and inner sleeves 10,12, except that the internal diameter of the body 11 is uniform over its whole length, the inner sleeve 12 tapers internally from the end 21 of the body 11 to the end 19 of the inner sleeve, and the outer sleeve 10 tapers externally from the end 21 to approximately the end 19 of the inner sleeve.

Figure 4 shows a device which differs from the device of Figure 3, in that it is formed as one-piece 22 having a uniform internal diameter and tapering externally from its end 21 to a point 19 approximately at its mid-length.

In the devices of Figures 1 and 3, the material of the inner sleeve 12 is substantially softer and therefore substantially more easily compressible than the material of the outer sleeve 10.

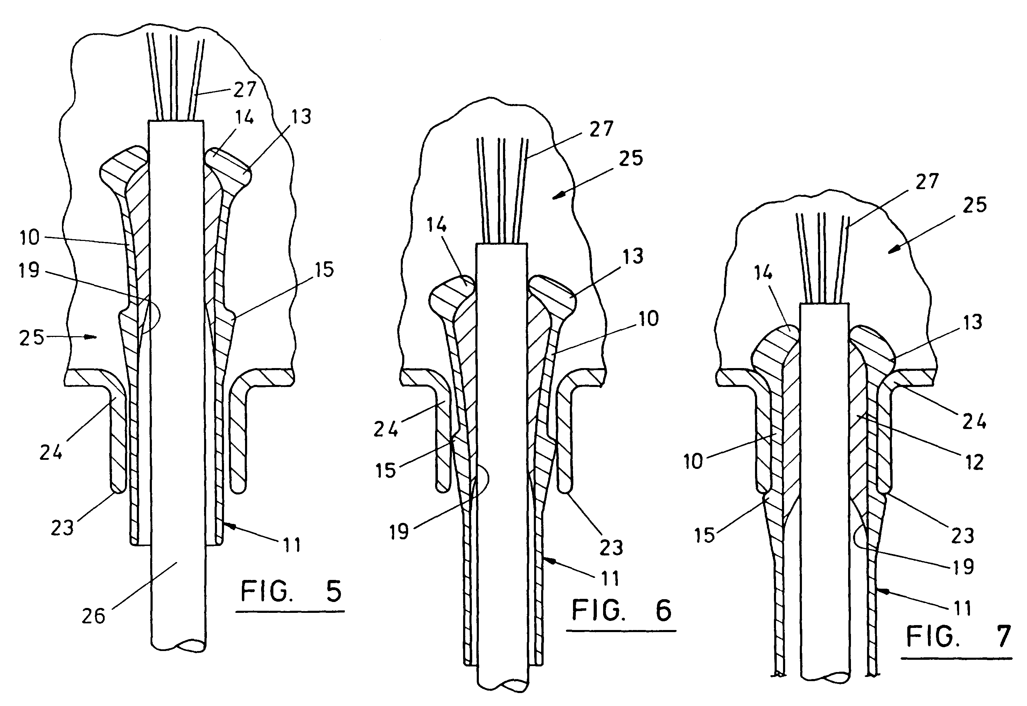

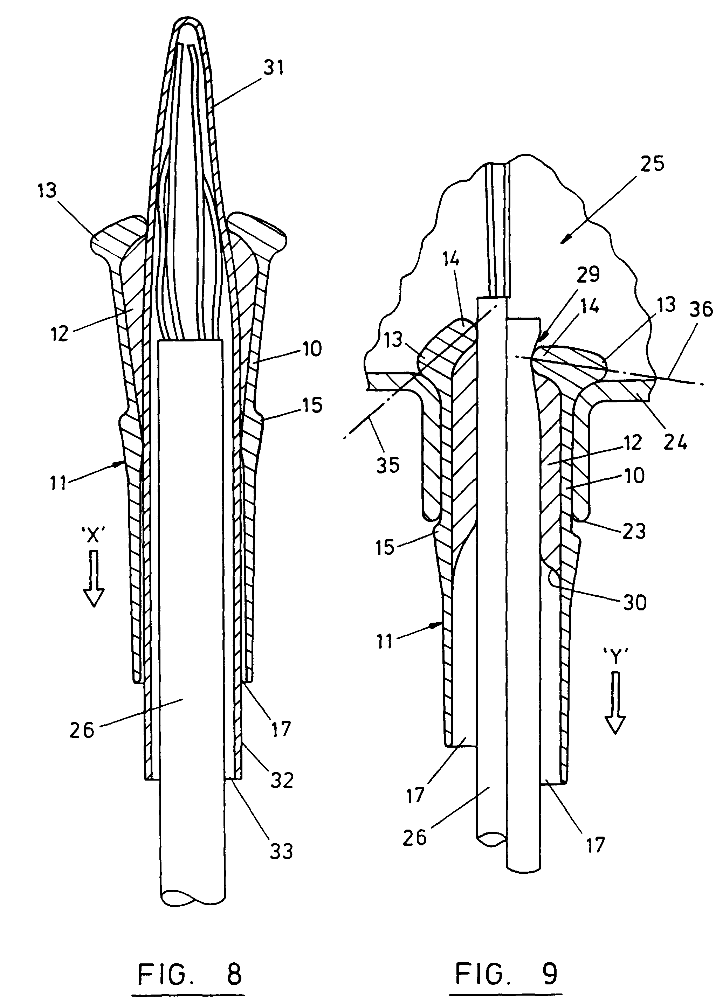

Figures 5 to 7 show successive stages in the procedure of introducing and securing a cable 26 in a cable entry port 24 of a cable splice enclosure indicated at 25, using a cable sealing and locking device as shown in Figure 1. Initially the end of the cable 26 is passed through the device 11: the insulation is cut back from the end of the cable 26 to bare end lengths of the individual conductors (or optical fibres) 27 which are to be spliced with the conductors (or optical fibres) of other cables entering the enclosure through similar cable entry ports of the enclosure. The locking and sealing device 11 is preferably fitted to the end of the cable once the end of the cable has been inserted through the cable entry port 24 and into the enclosure. Then the installer grips the cable and device 11 with his fingers and pulls them together through the tubular entry port 24 in the outwards direction relative to the enclosure, pulling the annular projection 15 through the port 24 as shown in Figure 6, until finally the device reaches the position shown in Figure 7. It will be appreciated that the inner sleeve 12 becomes radially compressed as the device 11 is pulled through the cable entry port 24. In the final position, shown in Figure 7, the external annular projection 13 of the device 11 abuts the inner end of the entry port 24 and the external projection 15 of the device abuts the outer end 23 of the entry port. Accordingly, the annular projections 13,15 prevent the device 11 from moving in either axial direction, and the cable is prevented from moving because it is firmly gripped by the device 11.

Figure 8 shows the use of a tool 32 for applying the cable locking and sealing device 11 to the cable 26. The tool 32 comprises a tubular sleeve having an open end 33 and an opposite, tapering end 31. As shown, the end of the cable 26 is inserted into the tool 32 from its open end 33: the device 11 is fitted over the tapering end of the tool 32, and pulled along the tool 32, in the direction of the arrow X indicated in Figure 8, so radially expanding the device 11. The device is pulled further in this direction, to slide off the tool 32 and onto the cable 26, or instead the device 11 and cable 26 can be held still whilst the tool 32 is retracted in the direction opposite to arrow X.

Figure 9 shows an installed cable 26 and sealing and locking device 11 as in Figure 7. The left hand side of Figure 9 shows the device 11 when there is no load on the cable 26, whilst the right hand side of Figure 9 shows the device 11 when the cable 26 is subjected to a tensile force in the direction of the arrow Y. In the relaxed condition, the external and internal annular projections 13, 14 lie on a cone 35, but under the application of a force to the cable, the cable pulls the projections 13,14 into a much shallower cone 35, and the inner annular projection 14 bites into the cable 26, as shown at 29, to grip it more tightly at this location. Also, the inner sleeve 12 is in shear and so deforms at its end 30, as shown. A gap will appear between the end 23 of the cable entry port and the external annular projection 15, but is taken up again when the tensile load is removed from the cable (and the condition shown in the left hand side of Figure 1 is restored).

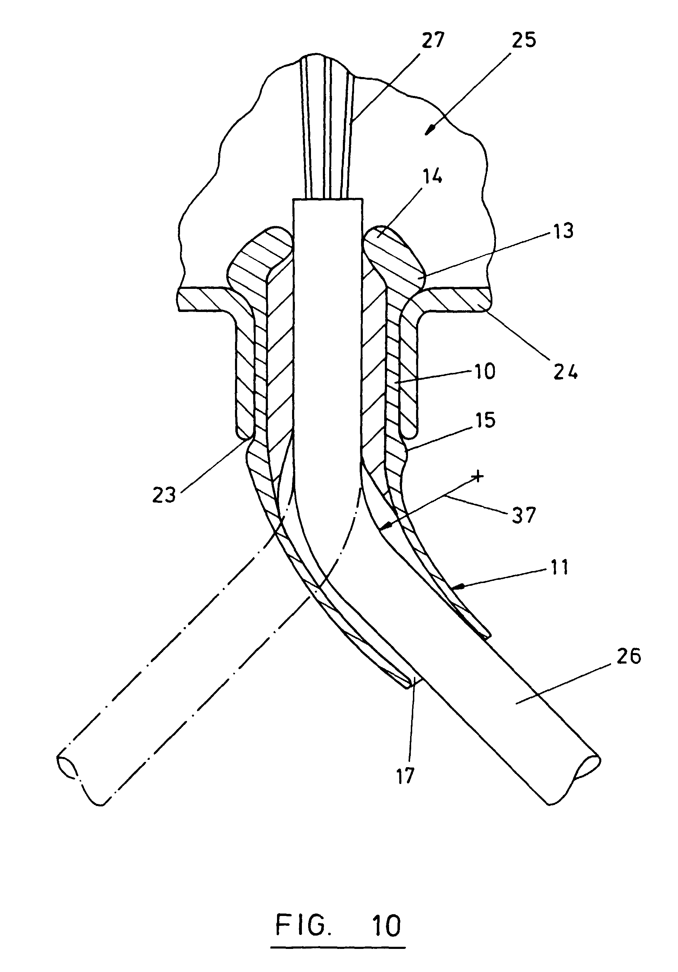

Figure 10 also shows the arrangement of Figure 7, and illustrates that when the cable 26 is bent away from a straight, axial position relative to the cable entry port 24, the free end portion of the sleeve 11 limits the angle through which the cable can be deflected, and so ensures that the cable is not bent to a radius (indicated at 37) less than the minimum permitted bending radius of the cable.

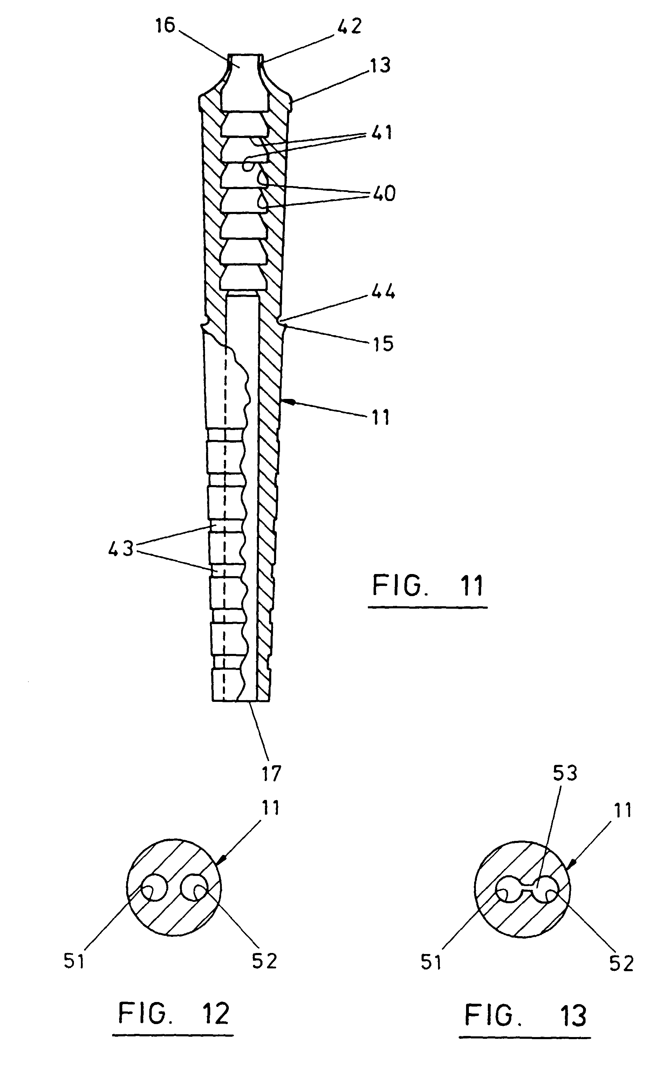

Figure 11 shows a further embodiment of cable sealing and locking device 11, formed as a one-piece tubular body of uniform internal diameter, but with a series of internal annular grooves 40, which define saw-tooth section ridges 41 between adjacent grooves. The end 16 of the device 11 is formed into an externally-tapered projection 42. The device 11 tapers over its outer surface, towards its opposite end 17, and the portion between the external annular projection 15 and the end 17 is formed with annular grooves 43. A further annular groove 44 is formed in the portion of the device 11 between its two external annular projections 13 and 15, immediately adjacent the latter projection.

The material of the one-piece device of Figure 11 may be relatively hard, but the internal tapering-section ridges 41 flex readily when the device is subjected to radial compression, upon pulling through the cable entry port.

Whilst the cable sealing and locking devices which have been described have a single through-passage of circular cross-section, they may instead be formed with a pair of such passages side-by-side. These passages e.g. 51, 52 may be spaced apart and separate from each other as shown in Figure 12, or joined together by a narrow slit 53 as shown in Figure 13: the latter arrangement is particularly appropriate for so-called "siamese" cables, which comprise a pair of side-by-side cables joined by a narrow web.

The through-passage (or through passages) of each of the above-described devices may be provided with a coating of grease or similar substance, to make it easier for the device to slide onto the cable and to improve the seal between the device and the cable when installed in the cable entry port.

## Claims

1. A device for sealing and locking a cable (26) within an entry port (24) of a housing, said device comprising an elongate tubular body (11) of elastomeric material for receiving said cable (26) therethrough, the tubular body (11) having a first end (16) and an opposite, tail end (17) and being formed with an annular external projection (15) intermediate its two ends (16,17), characterised in that the wall of the tubular body (11) is tapered in thickness, over a section of the body between said first end (16) thereof and the external projection (15), arranged to enable the device to be pulled into said entry port (24) from its said tail end (17) so that said tapered section becomes located within the entry port and radially compressed between the cable (26) and the entry port (24).

2. A device as claimed in claim 1, characterised in that said tubular body (11) is formed with a second annular, external projection (13) at or adjacent said first end (16) of the tubular body.

3. A device as claimed in claim 1 or 2, characterised in that the exterior surface of the tubular body (11) tapers from said first end (16) and towards said tail end (17), over said section thereof.

4. A device as claimed in claim 1 or 2, characterised in that the interior surface of the tubular body (11) tapers towards its said first end (16), over said section thereof.

5. A device as claimed in any preceding claim, characterised in that the interior surface of the tubular body (11) is formed with a series of annular grooves (41), at least over said section thereof.

6. A device as claimed in any preceding claim, characterised in that the exterior surface of the tubular body (11) is formed with a series of annular grooves (43), at least between the first external annular projection (15) and said tail end (17) of the tubular body.

7. A device as claimed in any preceding claim, characterised in that said tubular body (11) comprises an outer sleeve (10) and an inner sleeve (12), said inner sleeve (12) being of a relatively soft and compressible material as compared with the material of the outer sleeve (10).

8. A device as claimed in claim 7, characterised in that said inner sleeve (12) extends from a point at or adjacent said first end (16) of the tubular body (11) to a point (19) intermediate the opposite ends of the tubular body.

9. A device as claimed in claim 8, characterised in that the wall thickness of said inner sleeve (12) tapers in the direction away from said first end (16) of the tubular body (11).

10. A device as claimed in any one of claims 7 to 9, characterised in that said outer sleeve (10) is formed with internal and external annular projections (14,13), at or adjacent said first end (16) of the tubular body (11), which internal and external annular projections (14,13) lie generally on a cone directed axially outwards of the tubular body (11).

11. A device as claimed in any preceding claim, characterised in that the tubular body as two longitudinal through-passages (51,52) to receive respective cables.

12. A device as claimed in claim 11, characterised in that the two longitudinal through-passages (51,52) are interconnected by a longitudinal slit (53), to receive a pair of side-by-side cables which are joined by a longitudinal web.

13. A method of installing a cable through a cable entry port of a cable splice enclosure or of a housing of electrical equipment, the method comprising passing the cable (26) through the tubular body (11) of a cable sealing and locking device, said tubular body (11) being of elastomeric material, having a first end (16) and an opposite, tail end (17) and being formed with an annular external projection (15) intermediate its said two ends, then pulling said tubular body (11) together with said cable (26) into the cable entry port (24), the method being characterised in that the wall of the tubular body (11) tapers in thickness, over a section of the body between said first end (16) thereof and the external projection (15), and the device is pulled into said entry port (24) by means of its said opposite, tail end (17) and so that the tapered section of the tubular body (11) becomes located within said cable entry port and compressed between the cable entry port (24) and the cable (26).

## Patentansprüche

1. Vorrichtung zum Abdichten und Sichern eines Kabels (26) in einen Einlaßkanal (24) eines Gehäuses, wobei die Vorrichtung einen länglichen, röhrenförmigen Körper (11) aus elastomerem Material zur Aufnahme des Kabels (26) darin umfaßt, wobei der röhrenförmige Körper (11) ein erstes Ende (16) und ein gegenüberliegendes hinteres Ende (17) aufweist und mit einem ringförmigen äußeren Vorsprung (15) zwischen seinen beiden Enden (16, 17) ausgebildet ist, dadurch gekennzeichnet, daß die Stärke der Wand des röhrenförmigen Körpers (11) über einen Abschnitt des Körpers zwischen dessen erstem Ende (16) und dem äußeren Vorsprung (15) konisch zuläuft, und er derart angeordnet ist, daß die Vorrichtung von ihrem hinteren Ende (17) aus so in den Einlaßkanal (24) gezogen werden kann, daß der konisch zulaufende Abschnitt in dem Einlaßkanal angeordnet und zwischen dem Kabel (26) und dem Einlaßkanal (24) radial zusammengedrückt wird.

2. Vorrichtung nach Anspruch 1, dadurch gekennzeichnet, daß der röhrenförmige Körper (11) mit einem zweiten ringförmigen äußeren Vorsprung (13) an oder neben dem ersten Ende (16) des röhrenförmigen Körpers ausgebildet ist.

3. Vorrichtung nach Anspruch 1 oder 2, dadurch gekennzeichnet, daß die Außenfläche des röhrenförmigen Körpers (11) über den Abschnitt davon von dem ersten Ende (16) zum hinteren Ende (17) konisch zuläuft.

4. Vorrichtung nach Anspruch 1 oder 2, dadurch gekennzeichnet, daß die Innenfläche des röhrenförmigen Körpers (11) über den Abschnitt davon zu seinem ersten Ende (16) konisch zuläuft.

5. Vorrichtung nach einem der vorhergehenden Ansprüche, dadurch gekennzeichnet, daß die Innenfläche des röhrenförmigen Körpers (11) zumindest über den Abschnitt davon mit einer Reihe von ringförmigen Nuten (41) ausgebildet ist.

6. Vorrichtung nach einem der vorhergehenden Ansprüche, dadurch gekennzeichnet, daß die Außenfläche des röhrenförmigen Körpers (11) zumindest zwischen dem ersten äußeren ringförmigen Vorsprung (15) und dem hinteren Ende (17) des röhrenförmigen Körpers mit einer Reihe von ringförmigen Nuten (43) ausgebildet ist.

7. Vorrichtung nach einem der vorhergehenden Ansprüche, dadurch gekennzeichnet, daß der röhrenförmige Körper (11) eine Außenhülse (10) und eine Innenhülse (12) umfaßt, wobei die Innenhülse (12) aus einem Material besteht, daß im Vergleich zu dem Material der Außenhülse (10) relativ weich und zusammendrückbar ist.

8. Vorrichtung nach Anspruch 7, dadurch gekennzeichnet, daß sich die Innenhülse (12) von einer sich an oder neben dem ersten Ende (16) des röhrenförmigen Körpers (11) befindenden Stelle zu einer sich zwischen den einander gegenüberliegenden Enden des röhrenförmigen Körpers befindenden Stelle (19) erstreckt.

9. Vorrichtung nach Anspruch 8, dadurch gekennzeichnet, daß die Wandstärke der Innenhülse (12) in von dem ersten Ende (16) des röhrenförmigen Körpers (11) weg verlaufender Richtung konisch zuläuft.

10. Vorrichtung nach einem der Ansprüche 7 bis 9, dadurch gekennzeichnet, daß die Außenhülse (10) an oder neben dem ersten Ende (16) des röhrenförmigen Körpers (11) mit einem inneren und einem äußeren ringförmigen Vorsprung (14, 13) ausgebildet ist, die allgemein auf einem axial nach außen des röhrenförmigen Körpers (11) gerichteten Kegel liegen.

11. Vorrichtung nach einem der vorhergehenden Ansprüche, dadurch gekennzeichnet, daß der röhrenförmige Körper zwei in Längsrichtung verlaufende Durchgänge (51, 52) zur Aufnahme der jeweiligen Kabel aufweist.

12. Vorrichtung nach Anspruch 11, dadurch gekennzeichnet, daß die beiden in Längsrichtung verlaufenden Durchgänge (51, 52) zur Aufnahme eines Paares nebeneinander liegender Kabel, die durch einen Längssteg zusammengefügt sind, durch einen Längsschlitz (53) miteinander verbunden sind.

13. Verfahren zur Installation eines Kabels durch einen Kabeleinlaßkanal einer Kabelspleißmuffe oder eines Gehäuses einer elektrischen Anlage, wobei das Verfahren folgendes umfaßt: Hindurchführen des Kabels (26) durch den röhrenförmigen Körper (11) einer Kabelabdichtungs-und -sicherungsvorrichtung, wobei der röhrenförmige Körper (11) aus einem elastomeren Material besteht und ein erstes Ende (16) und ein gegenüberliegendes hinteres Ende (17) aufweist und zwischen seinen beiden Enden mit einem ringförmigen äußeren Vorsprung (15) ausgebildet ist, dann Ziehen des röhrenförmigen Körpers (11) zusammen mit dem Kabel (26) in den Kabeleinlaßkanal (24), dadurch gekennzeichnet, daß die Stärke der Wand des röhrenförmigen Körpers (11) über einen Abschnitt des Körpers zwischen dessen erstem Ende (16) und dem äußeren Vorsprung (15) konisch zuläuft und die Vorrichtung mittels seines gegenüberliegenden hinteren Endes (17) in den Einlaßkanal (24) gezogen wird, so daß der konisch zulaufende Abschnitt des röhrenförmigen Körpers (11) in dem Kabeleinlaßkanal angeordnet und zwischen dem Kabeleinlaßkanal (24) und dem Kabel (26) zusammengedrückt wird.

## Revendications

1. Dispositif d'étanchéité et de blocage d'un câble (26) à l'intérieur d'un port d'entrée (24) d'un boîtier, ledit dispositif comprenant un corps tubulaire allongé (11) en matériau élastomère destiné à recevoir ledit câble (26) à travers lui, le corps tubulaire (11) ayant une première extrémité (16) et une extrémité arrière opposée (17) et étant formé avec une saillie externe annulaire (15) entre ses deux extrémités (16, 17), caractérisé en ce que la paroi du corps tubulaire (11) a une épaisseur effilée sur une section du corps entre ladite première extrémité (16) de celui-ci et la saillie externe (15), agencée de manière à permettre de tirer le dispositif à travers ledit port d'entrée (24) depuis ladite extrémité arrière (17), de sorte que ladite section effilée vienne se positionner à l'intérieur du port d'entrée et soit comprimée radialement entre le câble (26) et le port d'entrée (24).

2. Dispositif selon la revendication 1, caractérisé en ce que ledit corps tubulaire (11) est formé avec une deuxième saillie extérieure annulaire (13) au niveau ou à proximité de ladite première extrémité (16) du corps tubulaire.

3. Dispositif selon la revendication 1 ou 2, caractérisé en ce que la surface extérieure du corps tubulaire (11) va en s'effilant depuis ladite première extrémité (16) et vers ladite extrémité arrière (17), sur ladite section de celui-ci.

4. Dispositif selon la revendication 1 ou 2, caractérisé en ce que la surface intérieure du corps tubulaire (11) va en s'effilant vers sa dite première extrémité (16), sur ladite section de celui-ci.

5. Dispositif selon l'une quelconque des revendications précédentes, caractérisé en ce que la surface intérieure du corps tubulaire (11) est formée avec une série de gorges annulaires (41), au moins sur ladite section de celui-ci.

6. Dispositif selon l'une quelconque des revendications précédentes, caractérisé en ce que la surface extérieure du corps tubulaire (11) est formée avec une série de gorges annulaires (43), au moins entre la première saillie annulaire extérieure (15) et ladite extrémité arrière (17) du corps tubulaire.

7. Dispositif selon l'une quelconque des revendications précédentes, caractérisé en ce que ledit corps tubulaire (11) comprend un manchon externe (10) et un manchon interne (12), ledit manchon interne (12) étant en matériau relativement souple et compressible, par comparaison avec le matériau du manchon externe (10).

8. Dispositif selon la revendication 7, caractérisé en ce que ledit manchon interne (12) s'étend depuis un point au niveau ou à proximité de ladite première extrémité (16) du corps tubulaire (11) jusqu'à un point (19) entre les extrémités opposées du corps tubulaire.

9. Dispositif selon la revendication 8, caractérisé en ce que l'épaisseur de paroi dudit manchon interne (12) va en s'effilant dans la direction s'éloignant de ladite première extrémité (16) du corps tubulaire (11).

10. Dispositif selon l'une quelconque des revendications 7 à 9, caractérisé en ce que ledit manchon externe (10) est formé avec des saillies annulaires interne et externe (14, 13) au niveau ou à proximité de ladite première extrémité (16) du corps tubulaire (11), lesquelles saillies annulaires interne et externe (14, 13) se trouvent généralement sur un cône dirigé axialement vers l'extérieur du corps tubulaire (11).

11. Dispositif selon l'une quelconque des revendications précédentes, caractérisé en ce que le corps tubulaire a deux passages traversants longitudinaux (51, 52) destinés à recevoir des câbles respectifs.

12. Dispositif selon la revendication 11, caractérisé en ce que les deux passages traversants longitudinaux (51, 52) sont interconnectés par une fente longitudinale (53) pour recevoir une paire de câbles juxtaposés qui sont joints par une nervure longitudinale.

13. Méthode d'installation d'un câble à travers un port d'entrée de câble d'un logement d'épissure de câbles ou d'un boîtier de matériel électrique, la méthode comprenant le passage du câble (26) à travers le corps tubulaire (11) d'un dispositif d'étanchéité et de blocage d'un câble, ledit corps tubulaire étant en matériau élastomère, ayant une première extrémité (16) et une extrémité arrière opposée (17), et étant formé avec une saillie externe annulaire (15) entre ses deux extrémités, puis l'action de tirer ledit corps tubulaire (11) conjointement avec ledit câble (26) dans le port d'entrée de câble (24), la méthode étant caractérisée en ce que la paroi du corps tubulaire (11) a une épaisseur effilée sur une section du corps entre ladite première extrémité (16) de celui-ci et la saillie externe (15), et le dispositif est tiré dans ledit port d'entrée (24) au moyen de sa dite extrémité arrière opposée (17) et de sorte que la section effilée du corps tubulaire (11) vienne se positionner à l'intérieur dudit port d'entrée de câble et soit comprimée entre le port d'entrée de câble (24) et le câble (26).
